# EUROPÄISCHE PATENTSCHRIFT

(11) **EP 2 783 442 B1**
(45) Veröffentlichungstag und Bekanntmachung des Hinweises auf die Patenterteilung: **24.10.2018**
(21) Anmeldenummer: 12797750.2
(22) Anmeldetag: 13.11.2012
(51) Int. Cl.: H02J 1/08, B60R 16/03, H02J 7/34, H02J 1/00

(54) **BORDNETZ UND VERFAHREN ZUM BETREIBEN EINES BORDNETZES**
VEHICLE ELECTRICAL SYSTEM AND METHOD FOR OPERATING A VEHICLE ELECTRICAL SYSTEM
RÉSEAU DE BORD ET PROCÉDÉ POUR FAIRE FONCTIONNER UN RÉSEAU DE BORD

(30) Priorität: 22.11.2011 DE 102011086829
(43) Veröffentlichungstag der Anmeldung: 01.10.2014
(73) Patentinhaber: Continental Automotive GmbH, 30165 Hannover (DE)
(72) Erfinder: REICHOW, Dirk, 93173 Wenzenbach (DE); GALLI, Tobias, 93426 Roding (DE)
(86) Internationale Anmeldenummer: PCT/EP2012/072481
(87) Internationale Veröffentlichungsnummer: WO 2013/075975

(56) Entgegenhaltungen:
- EP-A1- 2 149 833
- DE-A1- 19 859 036
- DE-A1-102005 029 081
- DE-A1-102006 017 921
- DE-A1-102007 017 187
- DE-A1-102008 031 125
- DE-A1-102010 014 104

## Beschreibung

Die Anmeldung betrifft ein Bordnetz, ein Fahrzeug mit einem Bordnetz und ein Verfahren zum Betreiben eines Bordnetzes.
Aus der DE 10 2005 057 306 A1 ist ein Verfahren zur Stabilisierung eines Gleichspannungs-Bordnetzes, insbesondere in einem Kraftfahrzeug, mit einem in dem Bordnetz angeordneten Gleichspannungswandler, der auf einer Eingangsseite von wenigstens einer elektrischen Energiequelle gespeist wird und der auf einer Ausgangsseite mehrere spannungsstabilisierende elektrische Ausgänge aufweist, die jeweils mit einem Teil-Bordnetz mit daran angeschlossenen elektrischen Verbrauchern verbunden sind, bekannt. Über eine jeweilige Spannungsstabilisierung an den jeweiligen Ausgängen werden auf die Eingangsseite des Gleichspannungswandlers wirksame elektrische Lastsprünge auf wenigstens einem spannungsschwankungs-sensiblen Teil-Bordnetz mit Hilfe von Steuerungsmitteln durch Variieren der Spannung und/oder der elektrischen Last auf wenigstens einem spannungsschwankungs-insensiblen Teil-Bordnetz zumindest teilweise kompensiert.
Aus der EP 2 149 833 A1 ist eine Schaltungsanordnung für ein Kraftfahrzeug mit einem Energiespeicher bekannt. Die Schaltungsanordnung umfasst einen Spannungswandler, der eingangsseitig mit dem Energiespeicher elektrisch gekoppelt ist und ausgangsseitig einem Bordnetz des Kraftfahrzeugs zugeordnet ist. Der Spannungswandler ist ausgebildet, abhängig von einem eingangsseitig anliegenden Sollwert das Bordnetz mit einer dem Sollwert zugeordneten Bordnetzspannung zu beaufschlagen.
Aus der DE 10 2007 017187 A1 ist ein Bordnetz für ein Kraftfahrzeug mit einer Fahrzeugbatterie, einem spannungssensiblen Verbrau cher, einem Energiespeicher und einem ersten und einem zweiten DC/DC-Wandler bekannt.

Aus der DE 10 2008 031125 A1 ist ein Verfahren zur Ansteuerung eines bidirektional betreibbaren Spannungswandlers eines Mehrspannungsbordnetzes bekannt, wobei der Spannungswandler auf einer ersten Anschlussseite mit einer ersten Energiespeichereinrichtung und auf einer zweiten Anschlussseite mit einer zweiten Energiespeichereinrichtung verbunden ist und in einer ersten Betriebsart strom- oder leistungsgeregelt und in einer zweiten Betriebsart spannungsgeregelt betrieben wird.

Aus der DE 10 2005 029081 A1 ist ein Bordnetz für ein Kraftfahrzeug mit einem Primärsystem bekannt, welches einen Generator, eine Bordnetzbatterie und einen Verbraucher aufweist. Das Bordnetz umfasst ferner einem Sekundärsystem, welches eine Energiespeichereinheit und einen Spannungswandler aufweist.

Aus der DE 10 2010 014104 A1 ist ein elektrisches Energiebordnetz für ein Kraftfahrzeug bekannt, das ein erstes Teilbordnetz, das eine erste Bordnetzspannung bereitstellt und eine erste Energiespeichereinheit sowie mindestens einen elektrischen Verbraucher aufweist, sowie ein zweites Teilbordnetz umfasst, das eine zweite Bordnetzspannung bereitstellt und eine zweite Energiespeichereinheit und einen elektrischen Verbraucher aufweist. Diese beiden Teilbordnetze können mittels einer steuerbaren elektrischen Koppeleinrichtung selektiv miteinander gekoppelt werden.

Aus der DE 10 2006 017921 A1 ist ein Verfahren zum Betreiben eines Bordnetzes eines Kraftfahrzeugs bekannt, wobei das Bordnetz ein Primärsystem, umfassend einen Generator, eine Bordnetzbatterie und mindestens einen Verbraucher in Parallelschaltung aufweist, sowie ein Sekundärsystem umfasst, das zum Primärsystem parallel geschaltet ist und einen mit einem bidirektionalen DC/DC-Wandler gekoppelten Superkondensator und eine Steuervorrichtung zur Steuerung des DC/DC-Wandlers umfasst.

Aufgabe der Anmeldung ist es, ein Bordnetz, ein Fahrzeug mit einem Bordnetz und ein Verfahren zum Betreiben eines Bordnetzes anzugeben, welche eine weiter verbesserte Spannungs-Stabilisierung ermöglichen.

Diese Aufgabe wird mit dem Gegenstand der unabhängigen Ansprüche gelöst. Vorteilhafte Weiterbildungen ergeben sich aus den abhängigen Ansprüchen.

Ein Bordnetz weist gemäß einem Aspekt der Anmeldung einen ersten Bordnetzzweig mit einer ersten Nominalspannung U₁ und einen zweiten Bordnetzzweig mit einer zweiten Nominalspannung U₂ auf. Zudem weist das Bordnetz zumindest einen DC/DC-Wandler auf, der zum Übertragen von Energie zumindest zwischen dem ersten Bordnetzzweig und dem zweiten Bordnetzzweig ausgebildet ist. Weiterhin weist das Bordnetz eine erste Ansteuereinheit auf, die zum Ansteuern des zumindest einen DC/DC-Wandlers ausgebildet ist. Darüber hinaus weist das Bordnetz eine erste Ermittlungseinheit auf, die zum Ermitteln einer momentanen Spannung U_{ist,1} des ersten Bordnetzzweigs ausgebildet ist. Ferner weist das Bordnetz eine erste Vergleichseinheit auf, die zum Vergleichen der ermittelten momentanen Spannung U_{ist,1} mit einem ersten oberen Spannungsschwellenwert U_{o,1} und einem ersten unteren Spannungsschwellenwert U_{u,1} ausgebildet ist, wobei U_{u,1} < U₁ < U_{o,1}. Die erste Ansteuereinheit ist derart zum Ansteuern des zumindest einen DC/DC-Wandlers ausgebildet, dass ein Energieübertrag von dem ersten Bordnetzzweig in den zweiten Bordnetzzweig erfolgt, falls U_{ist,1} > U_{o,1}. Weiterhin ist die erste Ansteuereinheit derart zum Ansteuern des zumindest einen DC/DC-Wandlers ausgebildet, dass ein Energieübertrag von dem zweiten Bordnetzzweig in den ersten Bordnetzzweig erfolgt, falls U_{ist,1} < U_{u,1}.

Das Bordnetz gemäß der genannten Ausführungsform ermöglicht eine weiter verbesserte Spannungs-Stabilisierung in dem ersten Bordnetzzweig, insbesondere durch das Vorsehen des zumindest einen DC/DC-Wandlers sowie der ersten Ansteuereinheit, die entsprechend zum Ansteuern des DC/DC-Wandlers ausgebildet ist. Dabei wird durch einen Energieübertrag von dem ersten Bordnetzzweig in den zweiten Bordnetzzweig, falls U_{ist,1} > U_{o,1}, ermöglicht, eine momentane Überspannung in dem ersten Bordnetzzweig zu verringern bzw. zu kompensieren. Weiterhin wird durch einen Energieübertrag von dem zweiten Bordnetzzweig in den ersten Bordnetzzweig, falls U_{ist,1} < U_{u,1}, ermöglicht, dass eine momentane Unterspannung in dem ersten Bordnetzzweig ebenfalls verringert bzw. kompensiert werden kann. Damit kann die Spannung in dem ersten Bordnetzzweig in vorteilhafter Weise auf einem Wert gehalten werden, der im Wesentlichen der ersten Nominalspannung U₁ entspricht. Insbesondere können Bordnetzschwankungen während auftretender Laständerungen in dem ersten Bordnetzzweig ausgeglichen werden.

In einer Ausführungsform des Bordnetzes weist die erste Vergleichseinheit zumindest einen Komparator auf. Dies ermöglicht, die ermittelte momentane Spannung U_{ist,1} in einfacher Weise mit dem ersten oberen Spannungsschwellenwert U_{o,1} und dem ersten unteren Spannungsschwellenwert U_{u,1} zu vergleichen.

Zudem kann die erste Vergleichseinheit zum Vergleichen der ermittelten momentanen Spannung U_{ist,1} mit einem zweiten oberen Spannungsschwellenwert U_{o,2} und einem zweiten unteren Spannungsschwellenwert U_{u,2} ausgebildet sein, wobei U_{u,1} < U_{u,2} < U₁ und U₁ < U_{o,2} < U_{o,1}.

Die erste Ansteuereinheit ist dabei bevorzugt zudem derart zum Ansteuern des zumindest einen DC/DC-Wandlers ausgebildet, dass der Energieübertrag von dem ersten Bordnetzzweig in den zweiten Bordnetzzweig beendet wird, falls U_{ist,1} < U_{o,2}. Weiterhin ist die erste Ansteuereinheit in der genannten Ausgestaltung derart zum Ansteuern des zumindest einen DC/DC-Wandlers ausgebildet, dass der Energieübertrag von dem zweiten Bordnetzzweig in den ersten Bordnetzzweig beendet wird, falls U_{ist,1} > U_{u,2}. Die genannten Ausführungsformen ermöglichen, bei der Ansteuerung des zumindest einen DC/DC-Wandlers ein Hystereseverhalten durch ein Vergleichen der momentanen Spannung U_{ist,1} des ersten Bordnetzzweigs mit dem zweiten oberen Spannungsschwellenwert U_{o,2} und dem zweiten unteren Spannungsschwellenwert U_{u,2} zu berücksichtigen.

In einer weiteren Ausführungsform weist das Bordnetz zudem einen Spannungsbegrenzungsschalter auf. Der Spannungsbegrenzungsschalter kann dabei zumindest eine Freilaufdiode aufweisen. Weiterhin kann der Spannungsbegrenzungsschalter durch eine inhärente Bodydiode eines MOSFETs gebildet werden. Das Vorsehen derartiger Spannungsbegrenzungsschalter ermöglicht, die Spannung in dem ersten Bordnetzzweig insbesondere bei geringen Überspannungswerten weiter zu stabilisieren.

Zudem kann das Bordnetz eine zweite Ermittlungseinheit aufweisen, die zum Ermitteln einer momentanen Spannung U_{ist,2} des zweiten Bordnetzzweigs ausgebildet ist. In dieser Ausgestaltung weist das Bordnetz weiterhin eine zweite Vergleichseinheit auf, die zum Vergleichen der ermittelten momentanen Spannung U_{ist,2} mit einem dritten oberen Spannungsschwellenwert U_{o,3} und einem dritten unteren Spannungsschwellenwert U_{u,3} ausgebildet ist, wobei U_{u,3} < U₂ < U_{o,3}.

Die erste Ansteuereinheit ist dabei bevorzugt zudem derart zum Ansteuern des zumindest einen DC/DC-Wandlers ausgebildet, dass ein Energieübertrag von dem zweiten Bordnetzzweig in den ersten Bordnetzzweig erfolgt, falls U_{ist,2} > U_{o,3}. Ferner ist die erste Ansteuereinheit bevorzugt derart zum Ansteuern des zumindest einen DC/DC-Wandlers ausgebildet, dass ein Energieübertrag von dem ersten Bordnetzzweig in den zweiten Bordnetzzweig erfolgt, falls U_{ist,2} < U_{u,3}. Mittels der genannten Ausführungsformen wird in vorteilhafter Weise eine verbesserte Spannungsstabilisierung in dem zweiten Bordnetzzweig ermöglicht. Dabei können Überspannungen in dem zweiten Bordnetzzweig durch einen Energieübertrag in den ersten Bordnetzzweig sowie Unterspannungen in dem zweiten Bordnetzzweig durch einen Energieübertrag von dem ersten Bordnetzzweig verringert bzw. kompensiert werden.

Der zumindest eine DC/DC-Wandler ist bevorzugt als Synchronwandler für einen bidirektionalen Energieübertrag zwischen dem ersten Bordnetzzweig und dem zweiten Bordnetzzweig ausgebildet. Die Anmeldung betrifft zudem ein Fahrzeug, das ein Bordnetz gemäß einer der genannten Ausführungsformen aufweist. Das Fahrzeug ist beispielsweise ein Kraftfahrzeug, insbesondere ein Personenkraftwagen oder ein Lastkraftwagen, und kann als Hybridfahrzeug oder Fahrzeug mit reinem Verbrennungsmotor-Antrieb ausgebildet sein.

Ferner betrifft die Anmeldung ein Verfahren zum Betreiben eines Bordnetzes, wobei das Bordnetz einen ersten Bordnetzzweig mit einer ersten Nominalspannung U₁, einen zweiten Bordnetzzweig mit einer zweiten Nominalspannung U₂ und zumindest einen DC/DC-Wandler zum Übertragen von Energie zumindest zwischen dem ersten Bordnetzzweig und dem zweiten Bordnetzzweig aufweist. Das Verfahren weist folgende Schritte auf. Es erfolgt ein Ermitteln eines ersten Werts einer momentanen Spannung U_{ist,1} des ersten Bordnetzzweigs. Zudem erfolgt ein Vergleichen des ermittelten ersten Werts der momentanen Spannung U_{ist,1} mit einem ersten oberen Spannungsschwellenwert U_{o,1} und einem ersten unteren Spannungsschwellenwert U_{u,1}, wobei U_{u,1} < U₁ < U_{o,1}. Falls U_{ist,1} > U_{o,1} erfolgt ein Ansteuern des zumindest einen DC/DC-Wandlers derart, dass ein Energieübertrag von dem ersten Bordnetzzweig in den zweiten Bordnetzzweig erfolgt. Falls U_{ist,1} < U_{u,1} erfolgt ein Ansteuern des zumindest einen DC/DC-Wandlers derart, dass ein Energieübertrag von dem zweiten Bordnetzzweig in den ersten Bordnetzzweig erfolgt.

Das Verfahren gemäß der Anmeldung weist die bereits im Zusammenhang mit dem Bordnetz gemäß der Anmeldung genannten Vorteile auf, welche an dieser Stelle zur Vermeidung von Wiederholungen nicht nochmals aufgeführt werden.

Falls U_{ist,1} > U_{o,1}, weist das Verfahren nach dem Ansteuern des zumindest einen DC/DC-Wandlers in einer Ausführungsform weiterhin folgende Schritte auf. Es erfolgt ein Ermitteln eines zweiten Werts der momentanen Spannung U_{ist,1} des ersten Bordnetzzweigs. Zudem erfolgt ein Vergleichen des ermittelten zweiten Werts der momentanen Spannung U_{ist,1} mit einem zweiten oberen Spannungsschwellenwert U_{o,2}, wobei U₁ < U_{o,2} < U_{o,1}. Falls U_{ist,1} < U_{o,2}, wird der Energieübertrag von dem ersten Bordnetzzweig in den zweiten Bordnetzzweig beendet.

In einer weiteren Ausführungsform wird, falls U_{ist,1} > U_{o,1}, der Energieübertrag von dem ersten Bordnetzzweig in den zweiten Bordnetzzweig nach einer vorbestimmten Zeitdauer beendet.

Falls U_{ist,1} < U_{u,1}, weist das Verfahren nach dem Ansteuern des zumindest einen DC/DC-Wandlers in einer weiteren Ausgestaltung zudem folgende Schritte auf. Es erfolgt ein Ermitteln des zweiten Werts der momentanen Spannung U_{ist,1} des ersten Bordnetzzweigs. Ferner erfolgt ein Vergleichen des ermittelten zweiten Werts der momentanen Spannung U_{ist,1} mit einem zweiten unteren Spannungsschwellenwert U_{u,2}, wobei U_{u,1} < U_{u,2} < U₁. Falls U_{ist,1} > U_{u,2}, wird der Energieübertrag von dem zweiten Bordnetzzweig in den ersten Bordnetzzweig beendet.

Falls U_{ist,1} < U_{u,1}, wird in einer weiteren Ausgestaltung des Verfahrens der Energieübertrag von dem zweiten Bordnetzzweig in den ersten Bordnetzzweig nach einer vorbestimmten Zeitdauer beendet.

In den oben genannten Ausführungsformen kann die erste Nominalspannung U₁ größer oder kleiner als die zweite Nominalspannung U₂ sein. Weiterhin kann die erste Nominalspannung U₁ der zweiten Nominalspannung U₂ entsprechen.

Unter den in der Anmeldung genannten Spannungswerten und Spannungsschwellenwerten wird dabei jeweils der Absolutbetrag der Spannung verstanden, das heißt, die genannten Spannungen weisen jeweils ein nicht-negatives Vorzeichen auf.

Ausführungsformen der Anmeldung werden nun anhand der beigefügten Figuren näher erläutert.
- Figur 1A: zeigt ein Blockschaltbild eines Bordnetzes gemäß einer ersten Ausführungsform der Anmeldung;
- Figur 1B: zeigt ein Blockschaltbild eines Bordnetzes gemäß einer zweiten Ausführungsform der Anmeldung;
- Figur 2: zeigt ein Prinzipschaltbild eines Bordnetzes gemäß der Anmeldung;
- Figur 3: zeigt Spannungs-Zeit-Diagramme in einem ersten Bordnetzzweig eines Bordnetzes.

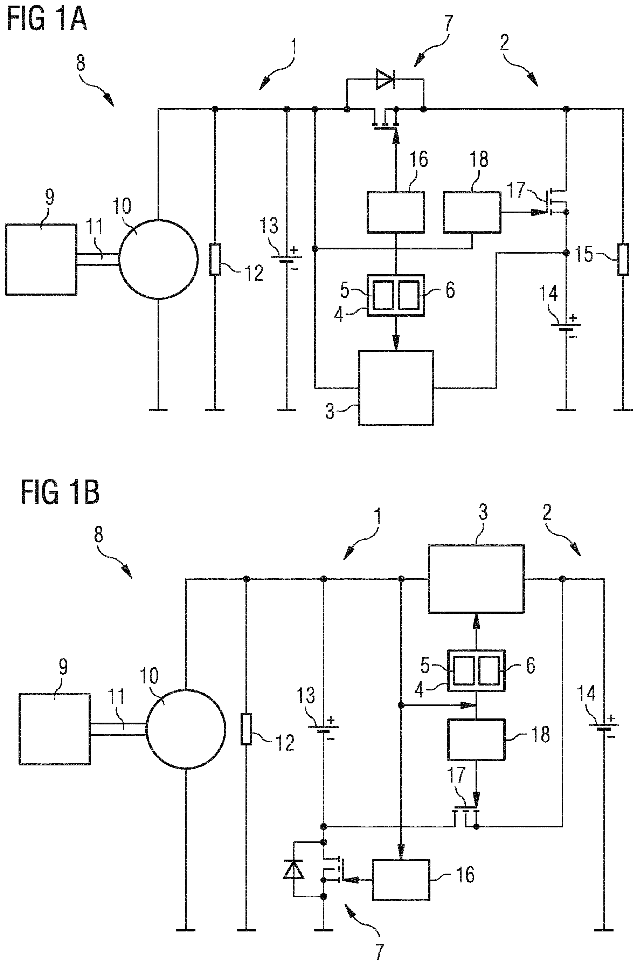

Figur 1A zeigt ein Blockschaltbild eines Bordnetzes 8 gemäß einer ersten Ausführungsform der Anmeldung. Das Bordnetz 8 kann beispielsweise Bestandteil eines nicht näher dargestellten Kraftfahrzeugs, insbesondere eines Personenkraftwagens oder eines Lastkraftwagens sein.

Das Bordnetz 8 weist einen ersten Bordnetzzweig 1 mit einer ersten Nominalspannung U₁, die auch als V_{sys1} bezeichnet werden kann, und einen zweiten Bordnetzzweig 2 mit einer zweiten Nominalspannung U₂, die auch als V_{sys2} bezeichnet werden kann, auf.

In dem ersten Bordnetzzweig 1 sind in der gezeigten Ausführungsform ein Generator 10, zumindest ein elektrischer Verbraucher 12 und eine elektrische Energiespeichervorrichtung 13, beispielsweise in Form eines 12-Volt-Akkumulators, angeordnet. Der Generator 10 ist über eine mechanische Kopplung 11, beispielsweise einen Keilrippenriemen, mit einem Motor 9 verbunden, wobei der Motor 9 als Verbrennungsmotor ausgebildet ist.

In dem zweiten Bordnetzzweig 2 sind in der gezeigten Ausführungsform eine elektrische Energiespeichervorrichtung 14, beispielsweise in Form eines 12-Volt-Akkumulators, und zumindest ein elektrischer Verbraucher 15 angeordnet.

Zwischen dem ersten Bordnetzzweig 1 und dem zweiten Bordnetzzweig 2 ist ein DC/DC-Wandler 3 angeordnet. Der DC/DC-Wandler 3 ist als bidirektionaler Gleichspannungswandler ausgebildet, der insbesondere die erste Nominalspannung U₁ in die zweite Nominalspannung U₂ und umgekehrt umwandeln kann. Dazu ist der DC/DC-Wandler 3 in der gezeigten Ausführungsform als Synchronwandler ausgebildet. Weiterhin ist es möglich, einen ersten DC/DC-Wandler, der als Aufwärtswandler bzw. Hochsetzsteller ausgebildet ist, und einen zweiten DC/DC-Wandler, der als Abwärtswandler bzw. Tiefsetzsteller ausgebildet ist, vorzusehen.

Das Bordnetz 8 weist zudem eine erste Ansteuereinheit 4 auf, die zum Ansteuern des zumindest einen DC/DC-Wandlers 3 ausgebildet ist. Die erste Ansteuereinheit 4 ist dabei mit dem Plus-Anschluss des ersten Bordnetzzweigs 1 gekoppelt bzw. verbunden. In der gezeigten Ausführungsform weist die erste Ansteuereinheit 4 eine erste Ermittlungseinheit 5 auf, die zum Ermitteln einer momentanen Spannung U_{ist,1} des ersten Bordnetzzweigs 1 ausgebildet ist. Weiterhin weist die erste Ansteuereinheit 4 eine erste Vergleichseinheit 6 auf, die zum Vergleichen der ermittelten momentanen Spannung U_{ist,1} mit einem ersten oberen Spannungsschwellenwert U_{o,1} und einem ersten unteren Spannungsschwellenwert U_{u,1} ausgebildet ist, wobei U_{u,1} < U₁ < U_{o,1}. Die erste Vergleichseinheit 6 weist dazu beispielsweise zumindest einen Komparator auf.

Die erste Ansteuereinheit 4 ist derart zum Ansteuern des DC/DC-Wandlers 3 ausgebildet, dass ein Energieübertrag von dem ersten Bordnetzzweig 1 in den zweiten Bordnetzzweig 2 erfolgt, falls U_{ist,1} > U_{o,1}. Weiterhin ist die erste Ansteuereinheit 4 derart ausgebildet, dass ein Energieübertrag von dem zweiten Bordnetzzweig 2 in den ersten Bordnetzzweig 1 erfolgt, falls U_{ist,1} < U_{u,1}.

Darüber hinaus weist das Bordnetz 8 einen Spannungsbegrenzungsschalter 7, der in der gezeigten Ausführungsform als MOSFET ausgebildet ist, und eine zweite Ansteuereinheit 16 zum Ansteuern des Spannungsbegrenzungsschalters 7 auf. Der Spannungsbegrenzungsschalter 7 ist mit den Pluspfaden des ersten Bordnetzzweigs 1 und des zweiten Bordnetzzweigs verbunden und mit dem DC/DC-Wandler 3 elektrisch parallel geschaltet. Weiterhin ist die zweite Ansteuereinheit 16 mit dem Pluspfad des ersten Bordnetzzweigs 1 gekoppelt.

Zudem weist das Bordnetz 8 einen Leistungsschalter 17 sowie eine Steuereinheit 18 zum Ansteuern des Leistungsschalters 17 auf. Der Leistungsschalter 17 ist dabei in der gezeigten Ausführungsform als MOSFET ausgebildet, wobei die inhärente Bodydiode des MOSFET in Figur 1A nicht näher dargestellt ist. Der Leistungsschalter 17 ist mit dem Spannungsbegrenzungsschalter 7 sowie dem Pluspfad der elektrischen Energiespeichervorrichtung 14 des zweiten Bornetzzweigs 2 verbunden.

Während eines Nominalbetriebszustands des Bordnetzes 8, d.h. eines Betriebs innerhalb der oben genannten Spannungsschwellenwerte, ist der Spannungsbegrenzungsschalter 7 geschlossen und der Leistungsschalter 17 geöffnet. Weitere Einzelheiten des Spannungsbegrenzungsschalters 7 sowie des Leistungsschalters 17 werden im Folgenden näher erläutert.

Mittels der gezeigten Ausführungsform können Bordnetzschwankungen während auftretender Laständerungen ausgeglichen werden. Die Laständerungen betreffen dabei ein elektrisches System mit mindestens einem elektronischen Schalter in Form des Spannungsbegrenzungsschalters 7 und mindestens einem Spannungswandlermodul in Form des DC/DC-Wandlers 3. Das System befindet sind dabei in einem nominalen Systemzustand.

An den Spannungsbegrenzungsschalter 7 werden typischerweise Anforderungen wie beispielsweise garantierter Einschaltwiderstand, Durchgangswiderstand, der auch als R_{ds,on} bezeichnet wird, und Unterstützung des Linearbetriebs, der auch als linear mode bezeichnet wird, gestellt. Der DC/DC-Wandler 3 unterliegt typischerweise Anforderungen wie beispielsweise dem Energieaustausch zwischen den zwei Energiesystemen in Form des ersten Bordnetzzweigs 1 und des zweiten Bordnetzzweigs 2.

Dabei steuert der DC/DC-Wandler 3 den Strom zwischen den zwei Energiesystemen. Der DC/DC-Wandler 3 befindet sich in der gezeigten Ausführungsform in einem Entlademodus, der auch als discharge mode oder MD1 bezeichnet wird, oder in einem Lademodus, der auch als charge mode oder MD2 bezeichnet wird. Die genannten Betriebsmodi sind typischerweise für eine längerfristige Ladung oder Entladung des zweiten Energiesystems in Form des zweiten Bordnetzzweigs 2 bzw. des ersten Energiesystems in Form des ersten Bordnetzzweigs 1 vorgesehen. Weiterhin kann sich der DC/DC-Wandler 3 in einem Ruhezustand befinden, der auch als standby mode oder MD0 bezeichnet wird.

Das Bordnetz 8 kann durch die Anwendung der Nachladeeinheit in Form des DC/DC-Wandlers 3 bzw. des mindestens einen Schalters in Form des Spannungsbegrenzungsschalters 7 kostengünstiger und spannungsstabiler ausgeführt werden und ein durch Laständerung entstehendes Bremsmoment auf die Brennkraftmaschine, d.h. den Motor 9, minimiert werden. Insbesondere der DC/DC-Wandler 3 wird somit in seiner Funktionalität erweitert. Damit wird die Erhaltung eines vorgegebenen Spannungszustands des Bordnetzes 8 bei Laständerungen in dem ersten Bordnetzzweig 1 ermöglicht. Laständerungen können dabei Unter- bzw. Überspannungen in dem Bordnetz 8 hervorrufen, wobei diese mittels Ansteuerung des DC/DC-Wandlers 3 bzw. des Spannungsbegrenzungsschalters 7 verringert werden können, wie im Folgenden weiter erläutert wird.

Dazu wird zunächst ein Bordnetzzustand mit Überspannung betrachtet. In diesem Zustand kann der Generator 10 eine Bordnetzüberspannung mangels Verbraucher nicht selbständig ausregeln. In einem Bordnetzzustand mit Überspannung in dem ersten Bordnetzzweig 1, wobei die Höhe der Bordnetzüberspannung dabei beliebig ist, wird der DC/DC-Wandler 3 für eine Spannungsstabilisierung angesteuert. Der DC/DC-Wandler 3 kann dabei als zweite oder auch als einzige Stufe eingesetzt werden. Damit kann ein so genannter Load Dump, d.h. das Entstehen von Spannungsspitzen, eliminiert oder unterdrückt werden bzw. dessen Amplitude und Mittelwert reduziert werden.

Dazu wird beispielsweise über eine Komparatorschaltung in der ersten Ansteuereinheit 4 die Bordnetzspannung in dem ersten Bordnetzzweig 1 gemessen und mit dem ersten oberen Spannungsschwellenwert U_{o,1} verglichen. Bei Überschreiten des Spannungsschwellwertes, d.h. des ersten oberen Spannungsschwellenwertes U_{o,1}, wird der DC/DC-Wandler 3 als Lastsenke betrieben.

Der DC/DC-Wandler 3 wird dazu über die erste Ansteuereinheit 4 typischerweise im Mikro- bis Millisekundenbereich in einem Modus "sink/source", der auch als MD3 bezeichnet wird, aktiviert und transportiert dabei überschüssige oder Teile der Energie aus dem ersten Bordnetzzweig 1 in den zweiten Bordnetzzweig 2. Damit wird eine Reduzierung der Überspannung innerhalb des ersten Bordnetzzweigs 1 und ein kontrollierter Spannungsanstieg in dem zweiten Bordnetzzweig 2 bewirkt. Zudem wird ein typischerweise geringer Teil der Überspannungsenergie aus dem ersten Bordnetzzweig 1 in Form von Wärme in dem DC/DC-Wandler 3 umgewandelt bzw. dissipiert.

Bei Unterschreiten eines Hysteresewertes in Form eines zweiten oberen Spannungsschwellenwertes U_{o,2}, wobei U₁ < U_{o,2} < U_{o,1}, wird der DC/DC-Wandler 3 wieder in einen Ruhemodus überführt. Der Betrieb des DC/DC-Wandlers 3 im sink mode ist typischerweise zeitlich begrenzt und damit insbesondere für transiente Bordnetzschwankungen ausgelegt. Ist diese zeitliche Begrenzung überschritten, schaltet die erste Ansteuereinheit 4 den DC/DC-Wandler 3 in den Ruhemodus, solange bis eine erneute Anforderung, beispielsweise über einen Mikrokontroller, den DC/DC-Wandler 3 wieder in den sink bzw. source mode überführt.

Ein Unterspannungs-Bordnetzzustand ist typischerweise ein Betrieb, in dem eine Bordnetzunterspannung durch die Kombination aus Generator 10 und elektrischer Energiespeichervorrichtung 13 beispielsweise mangels Motordrehmoment, Generatorregelverhalten, Leistungskapazität oder zu hoher Eigen- bzw. Bordnetzimpedanzen Z dynamisch nicht selbständig ausgeregelt bzw. ausgeglichen werden kann. Hervorgerufen werden Unterspannungen typischerweise durch sprunghafte Laständerungen, insbesondere in Verbindung mit ungünstigem Motordrehmoment.

Ein Unterspannungszustand kann wiederum mittels des DC/DC-Wandlers 3 kompensiert bzw. verringert werden. Dabei ist die Höhe der Bordnetzunterspannung typischerweise beliebig. Ein transienter Spannungseinbruch kann eliminiert oder unterdrückt bzw. dessen Amplitude und Mittelwert reduziert werden.

Dazu wird über beispielsweise eine Komparatorschaltung in der ersten Ansteuereinheit 4 die Bordnetzspannung in dem ersten Bordnetzzweig 1 gemessen und mit einem ersten unteren Spannungsschwellenwert U_{u,1} verglichen. Bei Unterschreiten des Spannungsschwellwertes in Form des ersten unteren Spannungsschwellenwerts U_{u,1} wird der DC/DC-Wandler 3 als Quelle bzw. "source" betrieben.

Der DC/DC-Wandler 3 wird dazu über die erste Ansteuereinheit 4 typischerweise im Mikro- bis Millisekundenbereich in dem Modus "sink/source", der wie bereits erläutert auch als MD3 bezeichnet wird, aktiviert und transportiert dabei einen entsprechenden Teil der gespeicherten Energie aus dem zweiten Bordnetzzweig 2 in den ersten Bordnetzzweig 1. Dadurch wird eine Reduzierung der Unterspannung innerhalb des ersten Bordnetzzweigs 1 und ein kontrollierter Spannungsabfall in dem zweiten Bordnetzzweig 2 bewirkt.

Bei Überschreitung eines Hysteresewertes oberhalb des ersten unteren Spannungsschwellenwerts U_{u,1} wird der DC/DC-Wandler 3 in der gezeigten Ausführungsform wieder in den Ruhezustand überführt. Der Betrieb des DC/DC-Wandlers 3 im source mode ist typischerweise zeitlich begrenzt und somit insbesondere für transiente Bordnetzschwankungen ausgelegt. Ist diese zeitliche Begrenzung überschritten, schaltet die erste Ansteuereinheit 4 den DC/DC-Wandler 3 in der gezeigten Ausführungsform in den Ruhezustand, solange bis eine erneute Anforderung, beispielsweise über einen Mikrokontroller, den DC/DC-Wandler 3 wieder in den sink bzw. source mode überführt.

Der DC/DC-Wandler 3 transportiert somit bei Unterspannungs-Zuständen Energie in Form von elektrischer Ladung von dem zweiten Bordnetzzweig 2 in den ersten Bordnetzzweig 1, wenn eine Anforderung durch eine entsprechende Systemgröße vorhanden ist. Neben einer Unterschreitung des ersten unteren Spannungsschwellenwerts U_{u,1} kann dazu zusätzlich eine von der ersten Ansteuereinheit 4 gemessene Stromänderung in dem ersten Bordnetzzweig 1 oder die Feststellung einer abnehmenden Motordrehzahl bei gleichzeitiger Anforderung einer konstanten bzw. beschleunigten Motordrehzahl herangezogen werden. Auftretende Unterspannungen in dem ersten Bordnetzzweig 1 werden damit verhindert bzw. reduziert. Weiterhin nimmt die Spannung in dem zweiten Bordnetzzweig 2 ab.

Bei Überspannungs-Zuständen transportiert der DC/DC-Wandler 3 Energie in Form von elektrischer Ladung von dem ersten Bordnetzzweig 1 in den zweiten Bordnetzzweig 2, wenn eine Anforderung durch eine entsprechende Systemgröße vorhanden ist. Neben einer Überschreitung des ersten oberen Spannungsschwellenwerts U_{o,1} kann dazu zusätzlich eine von der ersten Ansteuereinheit 4 gemessene Stromänderung in dem ersten Bordnetzzweig 1 oder die Feststellung einer zunehmenden Motordrehzahl bei gleichzeitiger Anforderung einer konstanten bzw. reduzierten Motordrehzahl herangezogen werden. Auftretende Überspannungen in dem ersten Bordnetzzweig 1 werden damit verhindert bzw. reduziert. Weiterhin nimmt die Spannung in dem zweiten Bordnetzzweig 2 zu.

In dem auch als MD3 bezeichneten Modus wird dabei die Entscheidung, ob der DC/DC-Wandler 3 in der Betriebsart Energiesenke bzw. "sink" oder in der Betriebsart Energiequelle bzw. "soure" betrieben wird, mittels der entsprechenden Komparatoren der Vergleichseinheit 6 getroffen. In beiden genannten Betriebsarten bzw. Zuständen findet ein Energietransport durch den DC/DC-Wandler 3 statt.

Mittels der gezeigten Ausführungsform kann ein Kostenvorteil durch die Möglichkeit, in Systemabstimmung mit Generator 10, elektrischer Energiespeichervorrichtung 13, elektrischem Verbraucher 12 und den Leitungsimpendanzen die zur Verfügung stehende Energie aus dem zweiten Bordnetzzweig 2 nutzen zu können, erreicht werden. Dadurch können insbesondere der Generator 10 und die elektrische Energiespeichervorrichtung 13 in kleineren Leistungsklassen realisiert werden.

Die Anmeldung lässt sich dabei in potentialgetrennten und nicht potentialgetrennten Systemen anwenden sowie in Schalttopologien im Masse- als auch im Pluspfad.

Der erste obere Spannungsschwellenwert U_{o,1} und der erste untere Spannungsschwellenwert U_{u,1} sowie die weiteren Spannungsschwellenwerte können in einer weiteren Ausgestaltung dynamisch angepasst werden, beispielsweise an eine geänderte Temperatur bzw. einen geänderten Sollwert der von dem Generator 10 erzeugten Spannung.

Figur 1B zeigt ein Blockschaltbild eines Bordnetzes 8 gemäß einer zweiten Ausführungsform der Anmeldung. Komponenten mit den gleichen Funktionen wie in Figur 1A werden mit den gleichen Bezugszeichen gekennzeichnet und im Folgenden nicht nochmals erläutert.

In der gezeigten zweiten Ausführungsform weist das Bordnetz 8 ebenfalls einen Leistungsschalter 17 sowie eine Steuereinheit 18 zum Ansteuern des Leistungsschalters 17 auf. Der Leistungsschalter 17 ist dabei in der gezeigten Ausführungsform als MOSFET ausgebildet, wobei die inhärente Bodydiode des MOSFET in Figur 1B nicht näher dargestellt ist. Der Leistungsschalter 17 ist mit dem Massepfad der elektrischen Energiespeichervorrichtung 13 des ersten Bornetzzweigs 1 sowie dem Pluspfad der elektrischen Energiespeichervorrichtung 14 des zweiten Bornetzzweigs 2, die in der zweiten Ausführungsform beispielsweise als 5-Volt-Akkumulator ausgebildet ist, verbunden und ermöglicht dadurch bei entsprechender Ansteuerung durch die Steuereinheit 18 eine Serienschaltung der beiden Energiespeichervorrichtungen und damit eine Anhebung der Spannung in dem ersten Bornetzzweig 1. Dies ist insbesondere vorteilhaft, falls der elektrische Verbraucher 12 als Hochstromverbraucher ausgebildet ist. Die Steuereinheit 18 ist dabei mit dem Pluspfad des ersten Bornetzzweigs 1 gekoppelt.

Weiterhin ist in der gezeigten zweiten Ausführungsform der Spannungsbegrenzungsschalter 7 im Massepfad der elektrischen Energiespeichervorrichtung 13 angeordnet. Die zweite Ansteuereinheit 16 des Spannungsbegrenzungsschalters 7 ist mit dem Pluspfad des ersten Bordnetzzweigs 1 gekoppelt.

Während eines Nominalbetriebszustands des Bordnetzes 8, d.h. eines Betriebs innerhalb der oben genannten Spannungsschwellenwerte, ist der Spannungsbegrenzungsschalter 7 geschlossen und der Leistungsschalter 17 geöffnet.

In einem Überspannungs-Anwendungsfall kann bei geringen Bordnetzüberspannungen, die auch als Vₒᵥₗ bezeichnet werden, in einer ersten Stufe der Spannungsbegrenzungsschalter 7 in einem linearen Betrieb einen entstehenden Überspannungsanteil um die Spannung V_{sw1} mit 0 V bis V_{d} reduzieren, wobei V_{d} die Diodenflussspannung der inhärenten Bodydiode des in der gezeigten Ausführungsform als MOSFET ausgebildeten Spannungsbegrenzungsschalters 7 ist. Dadurch kann ein Überspannungs-Zielwert der Bordnetzspannung geregelt bzw. gesteuert werden. Bei Überschreiten des Spannungsschwellwertes wird der Spannungsbegrenzungsschalter 7 im linearen Betrieb mittels der zweiten Ansteuereinheit 16 mit einem ersten Regelzielwert geregelt. Bei Unterschreiten eines Hysteresewertes unterhalb des ersten Regelzielwertes wird der Spannungsbegrenzungsschalter 7 wieder in den Durchlassmodus bzw. on mode überführt. Der Betrieb des Spannungsbegrenzungsschalters 7 im linearen Modus ist dabei nicht zeitlich begrenzt.

Der Spannungsbegrenzungsschalter 7 fungiert bei Überspannungs-Zuständen damit neben dem DC/DC-Wandler 3 ebenfalls als steuerbare Leistungssenke. Dabei arbeitet der Spannungsbegrenzungsschalter 7 über die Regeleinheit bzw. zweite Ansteuereinheit 16 im linearen Betrieb. Durch die in dem Spannungsbegrenzungsschalter 7 in Form eines MOSFET inhärent enthaltene Bodydiode können dabei Überspannungen bis typischerweise 0,7 V sehr schnell eliminiert werden. Im linearen Betrieb des Spannungsbegrenzungsschalters 7 ist die Wirkspannung an diesem negativ und die auftretende Netzüberspannung kann somit verringert werden. Der effektive Linearspannungsbereich des Spannungsbegrenzungsschalters 7 liegt typischerweise zwischen 0 V und 0,7 V. Das limitierende Element ist dabei die Flussspannung der Bodydiode, die typischerweise ca. 0,7 V beträgt. Relevant für die Position des Spannungsbegrenzungsschalters 7 in dem System ist dabei, dass der Spannungsbegrenzungsschalter 7 die Systemlast zumindest von der elektrischen Energiespeichervorrichtung 13 und zumindest in einer Stromrichtung abtrennen kann.

Der Spannungsbegrenzungsschalter 7 der in Figur 1A gezeigten ersten Ausführungsform kann bei Überspannungs-Zuständen ebenfalls als Leistungssenke fungieren, wobei dazu in dieser Ausführungsform der Leistungsschalter 17 geschlossen wird.

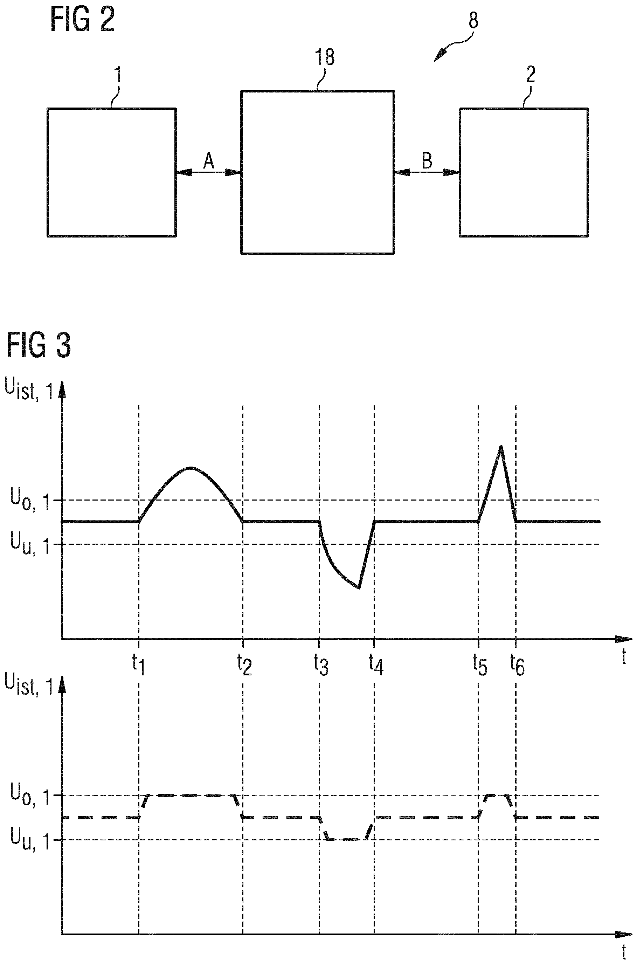

Figur 2 zeigt ein Prinzipschaltbild eines Bordnetzes 8 gemäß der Anmeldung. Komponenten mit den gleichen Funktionen wie in den vorhergehenden Figuren werden mit den gleichen Bezugszeichen gekennzeichnet und im Folgenden nicht nochmals erläutert.

Wie in Figur 2 schematisch dargestellt ist, kann ein Energieaustausch zwischen dem ersten Bordnetzzweig 1 und dem zweiten Bordnetzzweig 2 mittels einer Steuereinheit 18 erfolgen. Die Steuereinheit 18 weist dazu zumindest einen nicht näher dargestellten DC/DC-Wandler sowie eine Ansteuereinheit zum Ansteuern des DC/DC-Wandlers auf. Der Energieübertrag zwischen dem ersten Bordnetzzweig 1, der Steuereinheit 18 und dem zweiten Bordnetzzweig 2 ist dabei schematisch mittels Pfeilen A und B dargestellt.

Figur 3 zeigt Spannungs-Zeit-Diagramme in einem ersten Bordnetzzweig eines Bordnetzes. Dabei ist der zeitliche Verlauf der momentanen Spannung des ersten Bordnetzzweigs aufgetragen.

Mit einer durchgezogenen Linie ist in dem oberen Spannungs-Zeit-Diagramm der Figur 3 schematisch der Verlauf der Spannung dargestellt, wie sie sich ohne die oben erläuterte Ansteuerung des DC/DC-Wandlers ergibt. Zwischen den Zeitpunkten t₁ und t₂ sowie t₅ und t₆ ist eine Überspannung in dem ersten Bordnetzzweig vorhanden, wohingegen zwischen den Zeitpunkten t₃ und t₄ eine Unterspannung in dem ersten Bordnetzzweig vorliegt. Die Zeitintervalle zwischen t₁ und t₂ sowie t₃ und t₄ stellen beispielsweise Spannungsschwankungen im Millisekundenbereich und das Zeitintervall zwischen t₅ und t₆ beispielsweise eine Spannungsschwankung im Mikrosekundenbereich dar. Die Überspannungen überschreiten dabei einen ersten oberen Spannungsschwellenwert U_{o,1} und die Unterspannungen unterschreiten einen ersten unteren Spannungsschwellenwert U_{u,1}.

Wie mit einer gestrichelten Linie in dem unteren Spannungs-Zeit-Diagramm der Figur 3 schematisch dargestellt ist, kann mittels einer Ansteuerung des DC/DC-Wandlers derart, dass bei einer Überschreitung des ersten oberen Spannungsschwellenwert U_{o,1} eine Energieübertragung von dem ersten Bordnetzzweig in den zweiten Bordnetzzweig erfolgt, die Amplitude der Überspannung auf diesen Spannungsschwellenwert begrenzt werden. Weiterhin kann durch eine Ansteuerung des DC/DC-Wandlers derart, dass bei Unterschreitung des ersten unteren Spannungsschwellenwerts U_{u,1} ein Energieübertrag von dem zweiten Bordnetzzweig in den ersten Bordnetzzweig erfolgt, die Amplitude der Unterspannung auf diesen Schwellenwert begrenzt werden. Insgesamt ergibt sich damit eine Stabilisierung des Spannungsverlaufs in dem ersten Bordnetzzweig.

Dabei sind Systemtotzeiten insbesondere des DC/DC-Wandlers zu berücksichtigen, die zwischen einem Wechsel der Betriebsarten "sink" und "source" und einer damit verbundenen Richtungsumkehr des Energietransports zwischen den beiden Bordnetzzweigen liegen, innerhalb derer auftretende Über- bzw. Unterspannungen typischerweise nicht vollständig kompensiert werden. Derartige Systemtotzeiten können insbesondere konfigurierbar sein.

### Bezugszeichenliste

- 1: Bordnetzzweig
- 2: Bordnetzzweig
- 3: DC/DC-Wandler
- 4: Ansteuereinheit
- 5: Ermittlungseinheit
- 6: Vergleichseinheit
- 7: Spannungsbegrenzungsschalter
- 8: Bordnetz
- 9: Motor
- 10: Generator
- 11: Kopplung
- 12: Verbraucher
- 13: Energiespeichervorrichtung
- 14: Energiespeichervorrichtung
- 15: Verbraucher
- 16: Ansteuereinheit
- 17: Leistungsschalter
- 18: Steuereinheit

- A: Pfeil
- B: Pfeil

## Patentansprüche

1. Bordnetz aufweisend
- einen ersten Bordnetzzweig (1) mit einer ersten Nominalspannung U₁,
- einen zweiten Bordnetzzweig (2) mit einer zweiten Nominalspannung U₂,
- zumindest einen DC/DC-Wandler (3) ausgebildet zum Übertragen von Energie zwischen dem ersten Bordnetzzweig (1) und dem zweiten Bordnetzzweig (2),
- eine erste Ansteuereinheit (4) ausgebildet zum Ansteuern des zumindest einen DC/DC-Wandlers (3),
- eine erste Ermittlungseinheit (5) ausgebildet zum Ermitteln einer momentanen Spannung U_{ist,1} des ersten Bordnetzzweigs (1),
- eine erste Vergleichseinheit (6) ausgebildet zum Vergleichen der ermittelten momentanen Spannung U_{ist,1} mit einem ersten oberen Spannungsschwellenwert U_{o,1} und einem ersten unteren Spannungsschwellenwert U_{u,1}, wobei U_{u,1} < U₁ < U_{o,1},
- wobei die erste Ansteuereinheit (4) derart zum Ansteuern des zumindest einen DC/DC-Wandlers (3) ausgebildet ist, dass ein Energieübertrag von dem ersten Bordnetzzweig (1) in den zweiten Bordnetzzweig (2) erfolgt, falls U_{ist,1} > U_{o,1}, und dass ein Energieübertrag von dem zweiten Bordnetzzweig (2) in den ersten Bordnetzzweig (1) erfolgt, falls U_{ist,1} < U_{u,1},
**dadurch gekennzeichnet, dass**
- die erste Vergleichseinheit (6) zudem ausgebildet ist zum Vergleichen der ermittelten momentanen Spannung U_{ist,1} mit einem zweiten oberen Spannungsschwellenwert U_{o,2} und einem zweiten unteren Spannungsschwellenwert U_{u,2}, wobei U_{u,1} < U_{u,2} < U₁ und U₁ < U_{o,2} < U_{o,1}, und
- die erste Ansteuereinheit (4) zudem derart zum Ansteuern des zumindest einen DC/DC-Wandlers (3) ausgebildet ist, dass der Energieübertrag von dem ersten Bordnetzzweig (1) in den zweiten Bordnetzzweig (2) beendet wird, falls U_{ist,1} < U_{o,2}, und dass der Energieübertrag von dem zweiten Bordnetzzweig (2) in den ersten Bordnetzzweig (1) beendet wird, falls U_{ist,1} > U_{u,2}.

2. Bordnetz nach Anspruch 1, wobei die erste Vergleichseinheit (6) zumindest einen Komparator aufweist.

3. Bordnetz nach einem der vorhergehenden Ansprüche, zudem aufweisend einen Schalter (7) mit einer Freilaufdiode oder einer inhärenten Bodydiode zur Spannungsbegrenzung.

4. Bordnetz nach einem der vorhergehenden Ansprüche, wobei der zumindest eine DC/DC-Wandler (3) als Synchronwandler ausgebildet ist.

5. Fahrzeug aufweisend ein Bordnetz (8) nach einem der vorhergehenden Ansprüche.

6. Verfahren zum Betreiben eines Bordnetzes (8), wobei das Bordnetz (8) einen ersten Bordnetzzweig (1) mit einer ersten Nominalspannung U₁, einen zweiten Bordnetzzweig (2) mit einer zweiten Nominalspannung U₂ und zumindest einen DC/DC-Wandler (3) zum Übertragen von Energie zwischen dem ersten Bordnetzzweig (1) und dem zweiten Bordnetzzweig (2) aufweist und wobei das Verfahren folgende Schritte aufweist:
- Ermitteln eines ersten Werts einer momentanen Spannung U_{ist,1} des ersten Bordnetzzweigs (1),
- Vergleichen des ermittelten ersten Werts der momentanen Spannung U_{ist,1} mit einem ersten oberen Spannungsschwellenwert U_{o,1} und einem ersten unteren Spannungsschwellenwert U_{u,1}, wobei U_{u,1} < U₁ < U_{o,1},
- falls U_{ist,1} > U_{o,1}, Ansteuern des zumindest einen DC/DC-Wandlers (3) derart, dass ein Energieübertrag von dem ersten Bordnetzzweig (1) in den zweiten Bordnetzzweig (2) erfolgt, und, falls U_{ist,1} < U_{u,1} Ansteuern des zumindest einen DC/DC-Wandlers (3) derart, dass ein Energieübertrag von dem zweiten Bordnetzzweig (2) in den ersten Bordnetzzweig (1) erfolgt,
**dadurch gekennzeichnet, dass**
- falls U_{ist,1} > U_{o,1}, das Verfahren nach dem Ansteuern des zumindest einen DC/DC-Wandlers (3) weiterhin folgende Schritte aufweist:
∘ Ermitteln eines zweiten Werts der momentanen Spannung U_{ist,1} des ersten Bordnetzzweigs (1),
∘ Vergleichen des ermittelten zweiten Werts der momentanen Spannung U_{ist,1} mit einem zweiten oberen Spannungsschwellenwert U_{o,2}, wobei U₁ < U_{o,2} < U_{o,1},
∘ falls U_{ist,1} < U_{o,2}, Beenden des Energieübertrags von dem ersten Bordnetzzweig (1) in den zweiten Bordnetzzweig (2).

7. Verfahren nach Anspruch 6, wobei, falls U_{ist,1} < U_{u,1}, das Verfahren nach dem Ansteuern des zumindest einen DC/DC-Wandlers (3) weiterhin folgende Schritte aufweist:
- Ermitteln des zweiten Werts der momentanen Spannung U_{ist,1} des ersten Bordnetzzweigs (1),
- Vergleichen des ermittelten zweiten Werts der momentanen Spannung U_{ist,1} mit einem zweiten unteren Spannungsschwellenwert U_{u,2}, wobei U_{u,1} < U_{u,2} < U₁,
- falls U_{ist,1} > U_{u,2}, Beenden des Energieübertrags von dem zweiten Bordnetzzweig (2) in den ersten Bordnetzzweig (1).

## Claims

1. Vehicle electrical system, comprising
- a first vehicle electrical system branch (1) with a first nominal voltage U₁,
- a second vehicle electrical system branch (2) with a second nominal voltage U₂,
- at least one DC/DC converter (3) which is designed to transfer energy between the first vehicle electrical system branch (1) and the second vehicle electrical system branch (2),
- a first actuating unit (4) which is designed to actuate the at least one DC/DC converter (3),
- a first detection unit (5) which is designed to detect an instantaneous voltage U_{act,1} of the first vehicle electrical system branch (1),
- a first comparison unit (6) which is designed to compare the detected instantaneous voltage U_{act,1} with a first upper voltage threshold value U_{o,1} and a first lower voltage threshold value U_{u,1}, where U_{u,1} < U₁ < U_{0,1},
- wherein the first actuating unit (4) is designed to actuate the at least one DC/DC converter (3) in such a way that energy is transferred from the first vehicle electrical system branch (1) to the second vehicle electrical system branch (2) if U_{act,1} > U_{o,1}, and that energy is transferred from the second vehicle electrical system branch (2) to the first vehicle electrical system branch (1) if U_{act,1} < U_{u,1},
**characterized in that**
- the first comparison unit (6) is also designed to compare the detected instantaneous voltage U_{act,1} with a second upper voltage threshold value U_{o,2} and a second lower voltage threshold value U_{u,2}, where U_{u,1} < U_{u,2} < U₁ and U₁ < U_{o,2} < U_{o,1}, and
- the first actuating unit (4) is also designed to actuate the at least one DC/DC converter (3) in such a way that the transfer of energy from the first vehicle electrical system branch (1) to the second vehicle electrical system branch (2) is ended if U_{act,1} < U_{o,2}, and that the transfer of energy from the second vehicle electrical system branch (2) to the first vehicle electrical system branch (1) is ended if U_{act,1} > U_{u,2}.

2. Vehicle electrical system according to Claim 1, wherein the first comparison unit (6) has at least one comparator.

3. Vehicle electrical system according to one of the preceding claims, also having a switch (7) having a freewheeling diode or an inherent body diode for voltage limiting.

4. Vehicle electrical system according to one of the preceding claims, wherein the at least one DC/DC converter (3) is embodied as a synchronous converter.

5. Vehicle having a vehicle electrical system (8) according to one of the preceding claims.

6. Method for operating a vehicle electrical system (8), wherein the vehicle electrical system (8) has a first vehicle electrical system branch (1) with a first nominal voltage U₁, a second vehicle electrical system branch (2) with a second nominal voltage U₂ and at least one DC/DC converter (3) for transferring energy between the first vehicle electrical system branch (1) and the second vehicle electrical system branch (2), and wherein the method has the following steps:
- detecting a first value of an instantaneous voltage U_{act,1} of the first vehicle electrical system branch (1),
- comparing the detected first value of the instantaneous voltage U_{act,1} with a first upper voltage threshold value U_{o,1} and a first lower voltage threshold value U_{u,1}, where U_{u,1} < U₁ < U_{o,1},
- if U_{act,1} > U_{o,1}, actuating the at least one DC/DC converter (3) in such a way that energy is transferred from the first vehicle electrical system branch (1) to the second vehicle electrical system branch (2), and if U_{act,1} < U_{u,1}, actuating the at least one DC/DC converter (3) in such a way that energy is transferred from the second vehicle electrical system branch (2) to the first vehicle electrical system branch (1),
**characterized in that**
- if U_{act,1} > U_{o,1}, the method also has the following steps after the actuation of the at least one DC/DC converter (3) :
∘ detecting a second value of the instantaneous voltage U_{act,1} of the first vehicle electrical system branch (1),
∘ comparing the detected second value of the instantaneous voltage U_{act,1} with a second upper voltage threshold value U_{o,2}, where U₁ < U_{o,2} < U_{o,1},
∘ if U_{act,1} < U_{o,2}, ending the transfer of energy from the first vehicle electrical system branch (1) to the second vehicle electrical system branch (2).

7. Method according to Claim 6, wherein if U_{act,1} < U_{u,1} the method also has the following steps after the actuation of the at least one DC/DC converter (3):
- detecting the second value of the instantaneous voltage U_{act,1} of the first vehicle electrical system branch (1),
- comparing the detected second value of the instantaneous voltage U_{act,1} with a second lower voltage threshold value U_{u,2}, where U_{u,1} < U_{u,2} < U₁,
- if U_{act,1} > U_{u,2} ending the transfer of energy from the second vehicle electrical system branch (2) to the first vehicle electrical system branch (1).

## Revendications

1. Réseau de bord comprenant
- une première branche de réseau de bord (1) ayant une première tension nominale U₁,
- une deuxième branche de réseau de bord (2) ayant une deuxième tension nominale U₂,
- au moins un convertisseur CC/CC (3), configuré pour le transfert d'énergie entre la première branche de réseau de bord (1) et la deuxième branche de réseau de bord (2),
- une première unité de pilotage (4), configurée pour piloter l'au moins un convertisseur CC/CC (3),
- une première unité de détermination (5), configurée pour déterminer une tension momentanée U_{ist,1} de la première branche de réseau de bord (1),
- une première unité de comparaison (6), configurée pour comparer la tension momentanée U_{ist,1} déterminée avec une première valeur de seuil de tension supérieure U_{o,1} et une première valeur de seuil de tension inférieure U_{u,1},
avec U_{u,1} < U₁ < U_{o,1},
- la première unité de pilotage (4) étant configurée pour piloter l'au moins un convertisseur CC/CC (3) de telle sorte qu'un transfert d'énergie est effectué de la première branche de réseau de bord (1) dans la deuxième branche de réseau de bord (2) dans le cas où U_{ist,1} > U_{o,1}, et qu'un transfert d'énergie est effectué de la deuxième branche de réseau de bord (2) dans la première branche de réseau de bord (1) dans le cas où U_{ist,1} < U_{u,1},
**caractérisé en ce que**
- la première unité de comparaison (6) est en outre configurée pour comparer la tension momentanée U_{ist,1} déterminée avec une deuxième valeur de seuil de tension supérieure U_{o,2} et une deuxième valeur de seuil de tension inférieure U_{u,2}, avec U_{u,1} < U_{u,2} < U₁ et U₁ < U_{o,2} < U_{o,1}, et
- la première unité de pilotage (4) est en outre configurée pour piloter l'au moins un convertisseur CC/CC (3) de telle sorte que le transfert d'énergie de la première branche de réseau de bord (1) dans la deuxième branche de réseau de bord (2) prend fin dans le cas où U_{ist,1} < U_{o,2}, et que le transfert d'énergie de la deuxième branche de réseau de bord (2) dans la première branche de réseau de bord (1) prend fin dans le cas où U_{ist,1} > U_{u,2}.

2. Réseau de bord selon la revendication 1, la première unité de comparaison (6) possédant au moins un comparateur.

3. Réseau de bord selon l'une des revendications précédentes, possédant en outre un commutateur (7) muni d'une diode de roue libre ou d'une diode à corps inhérente servant à la limitation de tension.

4. Réseau de bord selon l'une des revendications précédentes, l'au moins un convertisseur CC/CC (3) étant réalisé sous la forme d'un convertisseur synchrone.

5. Véhicule comprenant un réseau de bord (8) selon l'une des revendications précédentes.

6. Procédé pour faire fonctionner un réseau de bord (8), le réseau de bord (8) possédant une première branche de réseau de bord (1) ayant une première tension nominale U₁, une deuxième branche de réseau de bord (2) ayant une deuxième tension nominale U₂ et au moins un convertisseur CC/CC (3) servant au transfert d'énergie entre la première branche de réseau de bord (1) et la deuxième branche de réseau de bord (2) et le procédé comprenant les étapes suivantes :
- détermination d'une première valeur d'une tension momentanée U_{ist,1} de la première branche de réseau de bord (1),
- comparaison de la première valeur déterminée de la tension momentanée U_{ist,1} avec une première valeur de seuil de tension supérieure U_{o,1} et une première valeur de seuil de tension inférieure U_{u,1}, avec U_{u,1} < U₁ < U_{o,1},
- dans le cas où U_{ist,1} > U_{o,1}, pilotage de l'au moins un convertisseur CC/CC (3) de telle sorte qu'un transfert d'énergie est effectué de la première branche de réseau de bord (1) dans la deuxième branche de réseau de bord (2) et, dans le cas où U_{ist,1} < U_{u,1}, pilotage de l'au moins un convertisseur CC/CC (3) de telle sorte qu'un transfert d'énergie est effectué de la deuxième branche de réseau de bord (2) dans la première branche de réseau de bord (1),
**caractérisé en ce que**
- dans le cas où U_{ist,1} > U_{o,1}, le procédé comprend en plus les étapes suivantes après le pilotage de l'au moins un convertisseur CC/CC (3) :
∘ détermination d'une deuxième valeur de la tension momentanée U_{ist,1} de la première branche de réseau de bord (1),
∘ comparaison de la deuxième valeur déterminée de la tension momentanée U_{ist,1} avec une deuxième valeur de seuil de tension supérieure U_{o,2}, avec U₁ < U_{o,2} < U_{o,1},
∘ dans le cas où U_{ist,1} < U_{o,2}, fin du transfert d'énergie de la première branche de réseau de bord (1) dans la deuxième branche de réseau de bord (2).

7. Procédé selon la revendication 6, dans le cas où U_{ist,1} < U_{u,1}, le procédé comprenant en plus les étapes suivantes après le pilotage de l'au moins un convertisseur CC/CC (3) :
- détermination de la deuxième valeur de la tension momentanée U_{ist,1} de la première branche de réseau de bord (1),
- comparaison de la deuxième valeur déterminée de la tension momentanée U_{ist,1} avec une deuxième valeur de seuil de tension inférieure U_{u,2}, avec U_{u,1} < U_{u,2} < U₁,
- dans le cas où U_{ist,1} > U_{u,2}, fin du transfert d'énergie de la deuxième branche de réseau de bord (2) dans la première branche de réseau de bord (1).
